# EUROPEAN PATENT APPLICATION

(11) **EP 2 843 744 A1**
(43) Date of publication of application: **04.03.2015**
(21) Application number: 14788693.1
(22) Date of filing: 31.03.2014
(51) Int. Cl.: H01M 8/18, H01M 8/02

(54) **ELECTROLYTE SOLUTION FOR REDOX FLOW BATTERIES, AND REDOX FLOW BATTERY**

(30) Priority: 25.04.2013 JP 2013092866
(71) Applicant: Sumitomo Electric Industries, Ltd., Osaka-shi, Osaka 541-0041 (JP)
(72) Inventor: DONG, Yongrong, Osaka-shi Osaka 554-0024 (JP)
(74) Representative: Boult Wade Tennant
(86) International application number: PCT/JP2014/059395
(87) International publication number: WO 2014/174999

(57) **Abstract**

A redox flow battery electrolyte contains 5 mg/liter or less of an organic substance having a moiety containing an aliphatic hydrocarbon containing 8 carbon atoms to 24 carbon atoms, excluding a redox flow battery electrolyte containing at least one selected from the group consisting of 1-tetradecene, n-decane, 1-octanethiol, and ester-based organic substances having a moiety containing an aliphatic hydrocarbon containing 8 carbon atoms.

## Description

### Technical Field

The present invention relates to a redox flow battery electrolyte and a redox flow battery containing the redox flow battery electrolyte.

### Background Art

In recent years, natural energy (so-called renewable energy)-based power generation including solar power generation and wind power generation has been actively carried out worldwide to cope with global warming. The output of these types of power generation depends significantly on natural conditions such as weather. Therefore, if natural energy accounts for an increased proportion of an electric power system, there will be a problem with the operation of the electric power system, that is, a problem that it is difficult to maintain, for example, the frequency or the voltage. A measure against the problem is to use high-capacity storage batteries to attempt the smoothing of output fluctuations, the storage of surplus electricity, load leveling, and the like.

One of the high-capacity storage batteries is a redox flow battery. The redox flow battery is a secondary battery which is charged or discharged in such a way that a cathode electrolyte and an anode electrolyte are supplied to a battery cell including a cathode electrode, an anode electrode, and a separation membrane interposed therebetween. A redox flow battery electrolyte for use in such a redox flow battery usually uses a metal element of which the valence is varied by oxidation or reduction as an active material. The following batteries can be cited: for example, an iron (Fe⁺/Fe⁺)-chromium (Cr³⁺/Cr²⁺) redox flow battery using Fe ions and Cr ions as a cathode active material and an anode active material, respectively, and a vanadium (V²+/V³⁺-V⁴⁺/V⁵⁺) redox flow battery using V ions as cathode and anode active materials.

The redox flow battery is charged or discharged by electrochemical reactions (electrode reactions) on the electrodes. Therefore, if the electrodes do not work as designed, decreases in battery properties such as battery output and battery capacity are caused. If, for example, impurities adhere to surfaces of the electrodes to cover reactive sites on the electrodes, the surface area of each electrode is substantially reduced, leading to a decrease in battery output and a decrease in battery capacity. Among the impurities, a specific organic substance is known to significantly inhibit the electrode reactions even if the content of the specific organic substance in an electrolyte is extremely slight. For example, Patent Literature 1 cites 1-tetradecene (C₁₄H₂₈), 1-octanethiol (C₈H₁₈S), and esters as examples of the specific organic substance. Patent Literature 2 cites n-decane (C₁₀H₂₂) as an example of the specific organic substance.

### Citation List

### Patent Literature

PTL 1: Japanese Unexamined Patent Application Publication No. 2007-12468
PTL 2: Japanese Unexamined Patent Application Publication No. 2004-119311
PTL 3: Japanese Unexamined Patent Application Publication No. 2004-111182

### Summary of Invention

### Technical Problem

Even in the use of redox flow battery electrolytes containing a reduced amount of the specific organic substance disclosed in the above patent literatures, battery properties have decreased in some cases. That is, impurities significantly affecting the decrease of electrode reactions in the redox flow battery electrolytes have not possibly been identified.

Therefore, in view of the above circumstances, it is an object to provide a redox flow battery electrolyte capable of suppressing the decrease of battery properties. Furthermore, it is another object to provide a redox flow battery containing the redox flow battery electrolyte.

### Solution to Problem

The inventors have intensively investigated that among impurities contained in redox flow battery electrolytes, which substance significantly affects the decrease of, particularly, electrode reactions. As a result, it has become clear that an organic substance (including an aliphatic hydrocarbon containing 8 carbon atoms to 24 carbon atoms) having a moiety containing an aliphatic hydrocarbon containing 8 carbon atoms to 24 carbon atoms significantly affects the decrease of electrode reactions. The inventors have attained the present invention on the basis of this finding.

A redox flow battery electrolyte, according to an embodiment of the present invention, for use in a redox flow battery including a cathode electrode, an anode electrode, and a separation membrane interposed between the electrodes contains 5 mg/liter or less of an organic substance having a moiety containing an aliphatic hydrocarbon containing 8 carbon atoms to 24 carbon atoms, excluding a redox flow battery electrolyte containing at least one selected from the group consisting of 1-tetradecene, n-decane, 1-octanethiol, and ester-based organic substances having a moiety containing an aliphatic hydrocarbon containing 8 carbon atoms.

### Advantageous Effects of Invention

According to the above redox flow battery electrolyte, the decrease of properties of a redox flow battery can be suppressed.

### Brief Description of Drawing

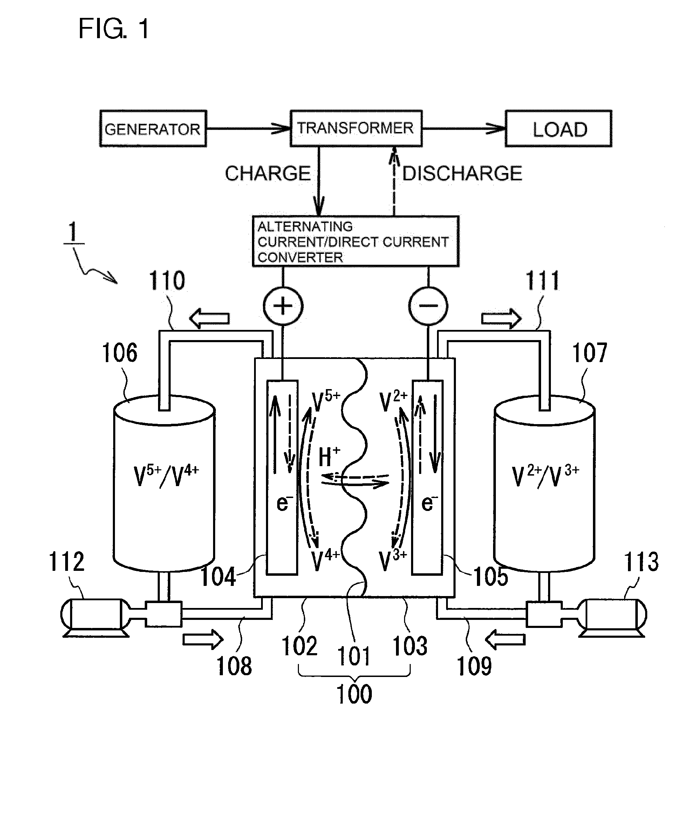

[Fig. 1] Figure 1 is a schematic configuration diagram of a redox flow battery containing vanadium ions acting as active materials.

### Description of Embodiments

### [Description of embodiments of present invention]

First of all, contents of embodiments of the present invention are enumerated and are described.
(1) A redox flow battery electrolyte (hereinafter referred to as the RF electrolyte) according to this embodiment is an RF electrolyte containing 5 mg/liter or less of an organic substance having a moiety containing an aliphatic hydrocarbon containing 8 carbon atoms to 24 carbon atoms. However, the following electrolyte is excluded: an RF electrolyte containing at least one selected from the group consisting of 1-tetradecene, n-decane, 1-octanethiol, and ester-based organic substances having a moiety containing an aliphatic hydrocarbon containing 8 carbon atoms.
   According to the RF electrolyte, the decrease of battery properties, such as battery output and battery capacity, of a redox flow battery (hereinafter referred to as the RF battery) can be suppressed. This is because in the RF electrolyte, the concentration of an organic substance having an extremely serious influence on electrode reactions is suppressed to a predetermined level or less. That is, the organic substance is an organic substance having a moiety containing an aliphatic hydrocarbon containing 8 carbon atoms to 24 carbon atoms.
(2) As the RF electrolyte according to this embodiment, an RF electrolyte in which the number of carbon atoms in a moiety containing an aliphatic hydrocarbon is 8 to 19 can be cited.
   In particular, the moiety containing the aliphatic hydrocarbon containing 8 carbon atoms to 19 carbon atoms is likely to inhibit the electrode reactions. Therefore, if the content of an organic substance having a moiety containing the above carbon atoms in the RF battery is limited, then the time-dependent decrease in battery performance of the RF battery can be suppressed.
(3) As the RF electrolyte according to this embodiment, an RF electrolyte in which the aliphatic hydrocarbon is a saturated aliphatic hydrocarbon can be cited.
   Saturated hydrocarbons are more chemically stable than unsaturated hydrocarbons and are difficult to degrade. That is, an organic substance having a moiety containing a saturated aliphatic hydrocarbon is hardly degraded over a long period and therefore may possibly continue to inhibit the electrode reactions when being excessively present. Therefore, if the content of the organic substance having the moiety containing the saturated aliphatic hydrocarbon in the RF battery is limited, then the time-dependent decrease in battery performance of the RF battery can be suppressed.
(4) As the RF electrolyte according to this embodiment, an RF electrolyte in which the organic substance is an organic substance having a moiety bonded to an aliphatic hydrocarbon through an oxygen atom can be cited.
   The organic substance is likely to inhibit the electrode reactions. Therefore, if the content of the organic substance in the RF battery is limited, then the time-dependent decrease in battery performance of the RF battery can be suppressed.
(5) As the RF electrolyte according to this embodiment, an RF electrolyte containing vanadium ions functioning as a cathode active material and an anode active material can be cited.
   The vanadium ions function as a cathode active material when being on the cathode side and function as an anode active material when being on the anode side. That is, the same RF electrolyte can be used as a cathode-side electrolyte and can also be used an anode-side electrolyte. On the cathode side, tetravalent vanadium ions (V⁴⁺) are oxidized to pentavalent vanadium ions (V⁵⁺) during charge and V⁵⁺ is reduced to V⁴⁺ during discharge. In contrast, on the anode side, trivalent vanadium ions (V³⁺) are reduced to divalent vanadium ions (V²⁺) during charge and V²⁺ is oxidized to V³⁺ during discharge.
(6) As the RF electrolyte, according to this embodiment, containing vanadium ions as active materials, an RF electrolyte having a vanadium ion concentration of 1.5 M to 1.9 M and a sulfate ion concentration of 4.1 M to 4.5 M can be cited.
   When the vanadium ion concentration and the sulfate ion concentration are within the above ranges, the RF electrolyte has an average valence of about 3.3 to 3.7. When the RF electrolyte has such an average valence, the balance of the concentration of vanadium ions with each valence is good for a cathode-side electrolyte and an anode-side electrolyte. Therefore, in the case of manufacturing an RF battery using the RF electrolyte having such an average valence, the capacity of the RF battery can be made extremely high.
(7) An RF battery according to this embodiment is an RF battery containing the RF electrolyte according to this embodiment.
   The RF battery is an RF battery exhibiting stable battery properties with time. This is because the concentration of an organic substance, likely to inhibit the electrode reactions, in an RF electrolyte used in the RF battery is suppressed to a predetermined level or less.
(8) As the RF electrolyte contained in the RF battery according to this embodiment, an RF electrolyte in which the content of an organic substance is less than or equal to 0.0005 x mass of electrodes α (g) ÷ volume of RF electrolyte β (liters) can be cited.

The mass of electrodes used and the amount (volume) of an electrolyte vary depending on the type, output, and capacity of an RF battery. When the amount (mass) of an organic substance adhered to the electrodes is 500 ppm higher than the mass of the electrodes, the battery resistance increases. That is, when the RF battery contains an RF electrolyte satisfying γ ≤ 0.0005 × α (g) ÷ β (liters), the increase in battery resistance of the RF battery is suppressed, where α (g) is the mass of electrodes used in the RF battery, β (liters) is the amount (volume) of the electrolyte, and γ (g/liter) is the content of the organic substance.

### [Details of embodiment of present invention]

The RF electrolyte according to this embodiment and an RF battery containing the same are described below. Incidentally, the present invention is not limited to these exemplifications, is defined by the claims, and is intended to include all modifications within the sense and scope equivalent to the claims.

### (First embodiment)

A first embodiment is described with reference to Fig. 1 using an RF battery 1 in which V ions are used as a cathode active material and an anode active material as an example. Referring to Fig. 1, solid-line arrows show the change in valence during charge and broken-line arrows show the change in valence during discharge. In Fig. 1, a metal element (metal ions) is shown in a typical form and can take a form other than the one shown therein.

### (Global configuration of RF battery)

The RF battery 1 shown in Fig. 1 is typically connected between a generator (for example, a solar power generator, a wind power generator, a common power plant, or the like) and a load (a consumer or the like) through an alternating current/direct current converter, stores electricity generated by the generator during charge, and supplies the stored electricity to the load during discharge. The RF battery 1, as well as a conventional RF battery, includes a battery cell 100 and a circulation mechanism (tanks, pipes, and pumps) for supplying electrolytes to the battery cell 100.

### (Battery cell and circulation mechanism)

In the RF battery 1, the battery cell 100 includes a cathode cell 102 including a cathode electrode 104, an anode cell 103 including an anode electrode 105, and a separation membrane 101 which separates the cells 102 and 103 and which is permeable to ions. The cathode cell 102 is connected to a cathode tank 106 storing a cathode electrolyte through pipes 108 and 110. The anode cell 103 is connected to an anode tank 107 storing an anode electrolyte through pipes 109 and 111. A pump 112 and pump 113 circulating the cathode electrolyte and the anode electrolyte, respectively, are placed in the pipe 108 and the pipe 109, respectively. The battery cell 100 is charged or discharged depending on the change in valence of metal ions (in this embodiment, V ions) acting as active materials in the cathode and anode electrolytes in such a way that the cathode electrolyte in the cathode tank 106 and the anode electrolyte in the anode tank 107 are circulated and are supplied to the cathode cell 102 (the cathode electrode 104) and the anode cell 103 (the anode electrode 105), respectively, with the pumps 112 and 113 through the pipes 108 to 111.

The battery cell 100 is usually used in the form of a cell stack including a plurality of stacked unit cells each including the cathode electrode 104 (the cathode cell 102), the anode electrode 105 (the anode cell 103), and the separation membrane 101. The cell stack includes cell frames that each include a bipolar plate (not shown) which has a surface overlaid with the cathode electrode 104 and another surface overlaid with the anode electrode 105 and a frame (not shown) which has a supply port for supplying an electrolyte and a discharge port for discharging an electrolyte and which is placed around the bipolar plate. Stacking the cell frames allows the supply ports and the discharge ports to form channels for the electrolytes. The channels are connected to the pipes 108 to 111. The cell stack is formed by stacking one of the cell frames, the cathode electrode 104, the separation membrane 101, the anode electrode 105, another one of the cell frames, and so on in that order. As the basic configuration of the RF battery, a known configuration may be appropriately used.

### (RF electrolyte)

An RF electrolyte according to this embodiment is a liquid containing a solvent and ions acting as active materials and contains an extremely small amount of a specific organic substance. In an example shown in Fig. 1, the RF electrolyte contains V ions and is common to the cathode and anode electrolytes. The cathode and anode electrolytes preferably have an average valence of 3.3 to 3.7 and a V ion concentration of 1 M to 3 M and more preferably an average valence of 3.4 to 3.6 and a V ion concentration of 1.5 M to 1.9 M.

A solvent in the RF electrolyte may be, for example, an aqueous solution of at least one selected from the group consisting of H₂SO₄, K₂SO₄, Na₂SO₄, H₃PO₄, H₄P₂O₇, K₂HPO₄, Na₃PO₄, K₃PO₄, HNO₃, KNO₃, HCl, and NaNO₃. Alternatively, the solvent in the RF electrolyte may be an organic acid solvent.

The specific organic substance in the RF electrolyte is an organic substance having a moiety containing an aliphatic hydrocarbon containing 8 carbon atoms to 24 carbon atoms. The organic substance includes aliphatic hydrocarbons. The aliphatic hydrocarbon-containing moiety of the organic substance includes those having a linear chain structure and those having a branched chain structure.

The followings can be cited as examples of the aliphatic hydrocarbon.
- Undecane (C₁₁F₂₄)
- Nonadecane (C₁₉H₄₀)
- Hexadecane (C₁₆H₃₄)
- Heptadecane (C₁₇H₃₆)
- 5-Octadecene (C₁₈H₃₆)
- Eicosane (C₂₀H₄₂)
- Heneicosane (C₂₁H₄₄)

A substituted organic substance containing an aliphatic hydrocarbon terminated with oxygen, nitrogen, sulfur, phosphorus, or the like can be cited as an example of the organic substance having the aliphatic hydrocarbon-containing moiety. In addition, the organic substance according to this embodiment includes ester-based organic substances having a moiety containing an aliphatic hydrocarbon and another moiety bonded thereto through an oxygen atom. Examples of such organic substances are enumerated below.

### (Substituted organic substances)

- Hexadecanenitrile (C₁₆H₃₁N, the number of carbon atoms in a moiety containing an aliphatic hydrocarbon is 15.)
- Octadecanenitrile (C₁₈H₃₅N, the number of carbon atoms in a moiety containing an aliphatic hydrocarbon is 17.)

### (Ester-based organic substances)

- Benzoic acid, 2-ethylhexyl ester (C₁₅H₂₂O₂, the number of carbon atoms in a moiety containing an aliphatic hydrocarbon is 8.)
   1,2-Benzenedicarboxylic acid, butyl octyl ester (C₂₀H₃₀O₄, there are two moieties containing an aliphatic hydrocarbon: the number of carbon atoms in one of the moieties is 4 and the number of carbon atoms in the other is 8.)
- 2-propenoic acid, 3-(4-methoxyphenyl)-, 2-ethylhexyl ester (C₁₈H₂₆O₃, the number of carbon atoms in a moiety containing an aliphatic hydrocarbon is 8.)

The content of the organic substance is 5 mg/liter or less. The content of the organic substance is more preferably 1 mg/liter or less. As far as the electrodes of the RF battery 1 are concerned, the content of the organic substance is less than or equal to 0.0005 × α ÷ β and is preferably less than or equal to 0.0001 × α ÷ β (where α is the mass (g) of the electrodes and β is the volume (liters) of the RF electrolyte).

### (Tanks and pipes)

The cathode tank 106, the anode tank 107, and the pipes 108 to 111 are members in contact with the RF electrolyte. Therefore, if the organic substance, which has the aliphatic hydrocarbon-containing moiety, is contained in or adhered to these members 106 to 111, the content of the organic substance in the RF electrolyte may possibly be increased together with the operation of the RF battery 1. Thus, these members 106 to 111 are preferably free from the organic substance or are preferably those (for example, those manufactured using a releasing agent, free from the organic substance, for molds for manufacturing members) manufactured through steps in which the organic substance is not used. These members 106 to 111 may be made of, for example, an ethylene homopolymer having a density of 0.080 g/cm³ to 0.960 g/cm³ (ASTM D 1505) and a melt flow rate of 0.01 g per 10 minutes to 20 g per 10 minutes (ASTM D 1238, measurement conditions: 190°C and a load of 2.16 kg), an ethylene-α-olein copolymer having a density and melt flow rate within the above ranges, or the like. The same applies to a transport tank, as well as these members 106 to 111, for transporting the RF electrolyte.

### (Test Example 1)

A plurality of commercially available carbon felts (3 cm × 3 cm, 0.3 g) were prepared as electrodes for cathodes and anodes. Each of the electrodes was immersed in 3 ml of a corresponding one of ethanol solutions containing different amounts of specific organic substances. The specific organic substances were two species below.
- Hexadecane: an aliphatic hydrocarbon containing 16 carbon atoms (hereinafter referred to as the controlled organic substance).
- p-Xylene: an aromatic hydrocarbon containing 8 carbon atoms (an organic substance having no moiety containing 8 carbon atoms to 24 carbon atom, hereinafter referred to as the non-controlled organic substance).

Next, the electrodes containing ethanol were dried. The specific organic substances were adsorbed on the electrodes, whereby the electrodes containing the organic substances were prepared. RF batteries 1 having the above configuration were manufactured using the electrodes. In the RF batteries 1, a cathode electrolyte used was a sulfuric acid solution having a vanadium ion concentration of 1.7 M, an average valence of 3.5, and a sulfate ion concentration of 4.3 M and an anode electrolyte used was a sulfuric acid solution having a vanadium ion concentration of 1.7 M, an average valence of 3.5, and a sulfate ion concentration of 4.3 M. The electrolytes used were other than those doped with the organic substances in advance, that is, those intentionally doped with the organic substances. The content of each of the specific organic substances in a corresponding one of the electrolytes was measured in such a way that the electrolytes were pretreated at 300°C for 5 minutes in a helium atmosphere and were then analyzed with a gas-chromatographic analyzer. The detection limit of the analyzer was 1 × 10⁻⁶ mg/liter. When the content of one of the specific organic substances in an RF electrolyte is less than or equal to the detection limit thereof, the RF electrolyte is regarded as being substantially free from the specific organic substance.

After being charged and discharged under charge-discharge conditions below, the RF batteries 1 including the electrodes having different amounts of the specific organic substances adsorbed thereon were measured for cell resistivity (Ω·cm²). The cell resistivity was determined by the formula "electrode area × (midpoint voltage of charge voltage curve - midpoint voltage of discharge voltage curve) ÷ (2 × current)". The results are shown in Table I. In the case where the batteries used in this example are regarded as 10- or 1-hour capacity batteries, the content (concentration in mg/liter) of each of the organic substances in a corresponding one of the electrolytes is shown in Table I.

### (Charge-discharge conditions)

Charge-discharge method: constant current
Current density: 70 (mA/cm²)
Charge finish voltage: 1.55 (V)
Discharge finish voltage: 1.00 (V)
Temperature: 25°C

**[Table I]**

| | Controlled organic substance: Hexadecane | | | |
|---|---|---|---|---|
| Sample No. | Concentration of organic substance with respect to electrodes (mass ppm) | Concentration of organic substance in electrolyte (mg/liter) | | Cell resistivity (Ω·cm²) |
| | | 1-hour capacity | 10-hour capacity | |
| 1 | 0 | 0 | 0 | 1.1 |
| 2 | 50 | 0.5 | 0.05 | 1.2 |
| 3 | 100 | 1 | 0.1 | 1.3 |
| 4 | 500 | 5 | 0.5 | 1.5 |
| 5 | 800 | 8 | 0.8 | 2.4 |

**[Table II]**

| | Non-controlled organic substance: p-Xylene | | | |
|---|---|---|---|---|
| Sample No. | Concentration of organic substance with respect to electrodes (mass ppm) | Concentration of organic substance in electrolyte (mg/liter) | | Cell resistivity (Ω·cm²) |
| | | 1-hour capacity | 10-hour capacity | |
| 6 | 0 | 0 | 0 | 1.1 |
| 7 | 50 | 0.5 | 0.05 | 1.1 |
| 8 | 100 | 1 | 0.1 | 1.1 |
| 9 | 300 | 3 | 0.3 | 1.1 |
| 10 | 410 | 4.1 | 0.4 | 1.2 |

As shown in Table I, it is clear that in the RF batteries containing the RF electrolytes containing the controlled organic substance, the less the content of the controlled organic substance in each RF electrolyte is, the less the increase in cell resistivity is. In particular, it is clear that the increase in cell resistivity is small when the concentration of the controlled organic substance in the RF electrolyte in any of the 10- and 1-hour capacity RF batteries is 5 mg/liter or less, particularly 1 mg/liter or less. Furthermore, as shown in Table I, it is clear that the less the amount of the controlled organic substance adsorbed on each electrode is, the less the increase in cell resistivity is. In particular, it is clear that the increase in cell resistivity is small when the content of the controlled organic substance is 500 ppm or less, particularly 100 ppm or less, with respect to the mass of the electrode. It is estimated that the output or capacity of a battery can be reduced in such a way that the content of the controlled organic substance in the electrolyte is adjusted to 5 mg/liter or less (preferably 1 mg/liter or less) or the content of the controlled organic substance is adjusted to 500 ppm or less (preferably 100 ppm or less) with respect to the mass of the electrode as described above.

On the other hand, as shown in Table II, in the RF batteries containing the RF electrolytes containing the non-controlled organic substance, which contains 8 or more carbon atoms and is not an aliphatic hydrocarbon, no significant increase in cell resistivity is observed.

In this example, Sample Nos. 1 and 6, in which the electrodes are free from the controlled organic substance and RF battery electrolytes used are free from the controlled organic substance, have the lowest cell resistivity. However, even in such batteries, the content of the controlled organic substance in each RF battery electrolyte may possibly increase to more than 5 mg/liter or more than 500 ppm with respect to the electrode mass because the controlled organic substance is degraded or dissolved from battery members. Thus, it is preferred that the content of the controlled organic substance is measured during battery use and an operation such as filtration is performed such that the content of the controlled organic substance is 5 mg/liter or less or 500 ppm or less with respect to the electrode mass.

### (Test Example 2)

In Test Example 2, a charge-discharge test was performed in consideration of an RF battery in practical use. First, a cathode electrode and negative electrode, made of a carbon felt, having an electrode area of 500 cm² were prepared. The total mass of the cathode and negative electrodes was about 35 g. Two types of RF electrolytes containing different amounts of controlled organic substances were prepared. Two- hour capacity batteries were prepared using the RF electrolytes. The prepared RF electrolytes were as described below.
(A) A vanadium-containing RF electrolyte containing 0.5 mg/liter of hexadecane (C₁₆H₃₄), hexadecanenitrile (C₁₆H₃₁N), and octadecanenitrile (C₁₈H_{35N}), which are controlled organic substances, in total.
(B) A vanadium-containing RF electrolyte containing 2.5 mg/liter of the three controlled organic substances specified in Item (A) in total.
* The valence and concentration of vanadium ions in each RF electrolyte and the sulfate ion concentration of the RF electrolyte are the same as those described in Test Example 1.

An RF battery with a 2-hour capacity was prepared using the RF electrolyte specified in Item (A) and an RF battery with a 2-hour capacity was prepared using the RF electrolyte specified in Item (B). The RF batteries were subjected to a 1,600-cycle charge-discharge test. In the RF battery prepared using the RF electrolyte specified in Item (A), the mass of the specific organic substances with respect to the electrodes was 100 ppm. In the RF battery prepared using the RF electrolyte specified in Item (B), the mass of the specific organic substances with respect to the electrodes was 500 ppm. Charge-discharge conditions in the charge-discharge test were the same as those disclosed in Test Example 1. The cell resistivity (Ω·cm²) was determined at the first cycle and the 1,600th cycle. As a result, the RF battery prepared using the RF electrolyte specified in Item (A) had a cell resistivity of about 1.24 Ω·cm² at the first cycle and a cell resistivity of about 1.26 Ω·cm² at the 1,600th cycle. On the other hand, the RF battery prepared using the RF electrolyte specified in Item (B) had a cell resistivity of about 1.31 Ω·cm² at the first cycle and a cell resistivity of about 1.45 Ω·cm² at the 1,600th cycle. From the above, it is clear that the RF electrolyte containing 0.5 mg/liter of the controlled organic substances is more useful in obtaining an RF battery having excellent cycle properties than the RF electrolyte containing 2.5 mg/liter of the controlled organic substances.

### Industrial Applicability

A redox flow battery electrolyte according to the present invention can be preferably used as an electrolyte for secondary batteries such as redox flow batteries. A redox flow battery according to this embodiment can be preferably used as a battery for load leveling use or for momentary power loss protection or power failure protection. Reference Signs List

- 1: Redox flow battery (RF battery)
- 100: Battery cell
- 101: Separation membrane
- 102: Cathode cell
- 103: Anode cell
- 104: Cathode electrode
- 105: Anode electrode
- 106: Cathode tank
- 107: Anode tank
- 108 to 111: Pipes
- 112 and 113: Pumps

## Claims

1. A redox flow battery electrolyte containing 5 mg/liter or less of an organic substance having a moiety containing an aliphatic hydrocarbon containing 8 carbon atoms to 24 carbon atoms, excluding a redox flow battery electrolyte containing at least one selected from the group consisting of 1-tetradecene, n-decane, 1-octanethiol, and ester-based organic substances having a moiety containing an aliphatic hydrocarbon containing 8 carbon atoms.

2. The redox flow battery electrolyte according to Claim 1, wherein the number of carbon atoms is 8 to 19.

3. The redox flow battery electrolyte according to Claim 1 or 2, wherein the aliphatic hydrocarbon is a saturated aliphatic hydrocarbon.

4. The redox flow battery electrolyte according to any one of Claims 1 to 3, wherein the organic substance has another moiety bonded to the aliphatic hydrocarbon through an oxygen atom.

5. The redox flow battery electrolyte according to any one of Claims 1 to 4, further containing vanadium ions functioning as a cathode active material and an anode active material.

6. The redox flow battery electrolyte according to Claim 5, wherein a vanadium ion concentration is 1.5 M to 1.9 M and a sulfate ion concentration is 4.1 M to 4.5 M.

7. A redox flow battery comprising the redox flow battery electrolyte according to any one of Claims 1 to 6.

8. The redox flow battery according to Claim 7, wherein the content of the organic substance is less than or equal to 0.0005 × α ÷ β, where α is the mass, in g, of electrodes and β is the volume, in liters, of the redox flow battery electrolyte.
